Europäisches Patentamt

European Patent Office

Office européen des brevets

(11) Veröffentlichungsnummer: **0 231 481**
**B1**

## (12) EUROPÄISCHE PATENTSCHRIFT

(45) Veröffentlichungstag der Patentschrift:
09.05.90

(51) Int. Cl.⁵: **H02M 3/335**

(21) Anmeldenummer: **86116993.6**

(22) Anmeldetag: **06.12.86**

(54) Gleichstrom-Wechselstrom-Wandler mit asymmetrischer Halbbrückenschaltung.

(30) Priorität: **01.02.86 DE 3603071**

(43) Veröffentlichungstag der Anmeldung:
**12.08.87 Patentblatt 87/33**

(45) Bekanntmachung des Hinweises auf die Patenterteilung:
**09.05.90 Patentblatt 90/19**

(84) Benannte Vertragsstaaten:
**CH DE FR GB IT LI**

(56) Entgegenhaltungen:
**FR-A- 2 360 208**
**GB-A- 2 127 239**

(73) Patentinhaber: **LEYBOLD AKTIENGESELLSCHAFT,
Wilhelm-Rohn-Strasse 25, D-6450 Hanau am Main 1(DE)**

(72) Erfinder: **Hubertus, Guido, Portlandstrasse 20,
D-6500 Mainz(DE)**
Erfinder: **Thomas, Friedrich-Werner, Dr.-Ing.,
Schwarzwaldweg 2, D-6460 Gelnhausen 2(DE)**
Erfinder: **Sperzel, Wolfgang, Dipl.-Ing.,
Heimatfriedering 3A, D-6460 Gelnhausen(DE)**
Erfinder: **Stürmer, Johann, Pestalozzistrasse 8,
D-6465 Freigericht 1(DE)**

(74) Vertreter: **Schickedanz, Willi, Dipl.-Ing., Langener
Strasse 68, D-6050 Offenbach/Main(DE)**

## Beschreibung

Die Erfindung betrifft einen Gleichstrom-Wechselstrom-Wandler mit asymmetrischer Halbbrückenschaltung, die eine energiespeichernde Komponente aufweist.

Um elektrische Gleichstrom-Verbraucher aus einem Wechsel- oder Drehstromnetz zu betreiben, werden im allgemeinen steuerbare Gleichrichterschaltungen mit Anpaßtransformatoren und nachgeschalteten Siebmitteln verwendet. Das Bauvolumen dieser Anpaßtransformatoren und Siebmittel ist allerdings bei einer 50 Hz-Netzwechselspannung relativ groß, weshalb man hochfrequente Zerhacker von z. B. 20 KHz verwendet, deren Ausgangswechselspannung gleichgerichet wird; mittels Pulsbreitenmodulation ist es außerdem möglich aus einer aus dem Netz erzeugten festen Gleichspannung eine variable Gleichspannung zu erzeugen. Als Zerhacker kommen entweder asymmetrische Halbbrücken- oder symmetrische Vollbrückenschaltungen in Verbindung mit streuarmen Transformatoren zur Anwendung (vergl. Thomson CSF, Handbuch II, Transistor in der Leistungselektronik, Kapitel XIII, Joel Redouty, Grundlagen für die Entwicklung eines Schaltnetzteils für den Betrieb am 380 V-Netz, S. 225-241). Diese beiden Wandler-Schaltungen zeigen ein grundsätzlich unterschiedliches Verhalten. Der Grund hierfür besteht darin, daß die Vollbrückenschaltung einen symmetrischen Wandler darstellt, in dem der magnetische Fluß bipolar ist. Der magnetische Arbeitspunkt beschreibt hierbei einen zum Nullpunkt symmetrischen Zyklus, und der Mittelwert des Flusses im Kern ist gleich Null.

Die Halbbrückenschaltung arbeitet asymmetrisch, d.h. der magnetische Fluß ist unipolar, weil der magnetische Arbeitspunkt bzw. magnetische Fluß hierbei einen Zyklus in nur einem Quadranten beschreibt und der Mittelwert des Flusses ungleich Null ist. Deshalb wird in einem asymmetrischen Wandler der Transformator in der Energieübertragungsphase magnetisiert, was eine zusätzliche Entmagnetisierungsphase erfordert, in der keine Energie übertragen wird. Im asymmetrischen Wandler kann folglich nur während eines Teils der Periode, z. B. maximal 50%, eine Energieübertragung erfolgen. Deshalb wird an den Ausgang eines asymmetrischen Wandlers bei einer Gleichstrom-Gleichstrom-Wandlung keine Vollweg-, sondern nur eine Halbweggleichrichterschaltung geschaltet.

Obwohl der symmetrische Wandler gegenüber dem asymmetrischen Wandler entscheidende Vorteile zu haben scheint, wird in der Praxis dennoch oft der asymmetrische Wandler bevorzugt (vgl. JP-A 59-63976, US-A 4 585 986, US-A 4 672 517), weil ein symmetrischer Wandler nie vollständig symmetrisch arbeitet und deshalb aufwendige Symmetrie-Korrekturschaltungen erfordert. Außerdem muß der Transformator im Verhältnis zur theoretischen Dimensionierung größer ausgelegt werden, um eine ungewollte Sättigung zu vermeiden.

Es ist bereits ein geregelter Gleichspannungs-Gleichspannungs-Wandler bekannt, der eine hochfrequente Verbindung verwendet (Ranganathan, Ziogas und Stefanovich: A Regulated DC-DC Voltage Source Converter Using a High Frequency Link, IEEE Transactions on Industry Applications, Band IA-18, No. 3, Mai/Juni 1982, S. 279–287). Diese hochfrequente Verbindung weist eine Halbbrückenschaltung mit zwei Thyristoren und zwei Dioden auf, welche eine Gleichspannung zerhackt. Die zerhackte Spannung wird sodann über einen Transformator einer Vollweg-Gleichrichterbrücke zugeführt. Die Regelung der Spannung erfolgt hierbei durch Änderung der Frequenz, mit der die Thyristoren der Halbbrückenschaltung angesteuert werden. Außerdem ist ein besonderer Schwingkreis vorgesehen.

Weiterhin ist eine stabilisierte Hochspannungsquelle bekannt, die eine asymmetrische Halbbrückenschaltung mit einem Transformator als Last aufweist, wobei die Sekundärseite dieses Transformators an einer Vollbrückenschaltung liegt (Japanische Offenlegungsschrift 59-17869). Diese stabilisierte Hochspannungsquelle weist eine geregelte Spannungsquelle von kleinerer Kapazität auf, die mit einer herkömmlichen und ungeregelten Dreiphasen-Vollwegspannungsquelle in Serie geschaltet ist. Die Ansteuerung der Transistoren der stabilisierten Spannungsquelle erfolgt hierbei auf herkömmliche Weise, d. h. die beiden Transistoren werden gleichzeitig und mit Impulsen von jeweils derselben Impulsform angesteuert. Lediglich die Breite der Impulse ist hierbei veränderbar, um eine Art von Pulsbreitenmodulation zu erzielen.

Ferner ist eine asymmetrische Halbbrücke mit Pulsbreitenansteuerung und sekundärer Halbwellengleichrichtung bekannt (FR-A 2 360 208). Hierbei werden jedoch die steuerbaren Schaltmittel der Halbbrücke stets mit denselben Impulsen beaufschlagt.

Schließlich ist auch ein Gleichstrom-Gleichstrom-Wandler bekannt, der einen Transformator mit einer Primär- und einer Sekundärwicklung sowie mit einem Kern aufweist, wobei die Primärwicklung über steuerbare Schaltmittel und Gleichrichter an einer Gleichstromquelle liegt (GB-A 2 127 239). Auch hier erfolgt die Ansteuerung aller Halbbrücken-Schalter mit denselben Impulsen.

Der Erfindung liegt die Aufgabe zugrunde, die Vorteile einer Vollbrücken-Zerhackerschaltung mit den Vorteilen einer Halbbrücken-Zerhackerschaltung zu verbinden.

Diese Aufgabe wird dadurch gelöst, daß die steuerbaren Schaltmittel der Halbbrückenschaltung mittels phasenverschobenen Steuerimpulsen von im wesentlichen 180° elektrisch angesteuert werden, wobei sich die Steuerimpulse, wenigstens teilweise zeitlich überlappen.

Der mit der Erfindung erzielte Vorteil besteht insbesondere darin, daß trotz Verwendung einer asymmetrischen Halbbrücken-Zerhackerschaltung ein quasi-symmetrischer Betrieb ermöglicht wird. Im Gegensatz zur herkömmlichen asymmetrischen Halbbrückenschaltung erfolgt hierdurch die Energieübertragung nicht nur während maximal 50 % einer Periode, sondern über maximal die ganze Periode. Im Gegensatz zu bekannnten Schaltungsanordnungen sind die Steuerimpulse der erfindungsgemäßen Schaltungsanordnung stets von gleicher Breite. Der Modulationseffekt wird also durch verschiedene Überlappungsgrade erreicht.

Die Ausgangsspannung ist gegenüber der herkömmlichen asymmetrischen Halbbrücke mit Einweggleichrichtung bei verdoppelter Pulszahl auf das Doppelte erhöht. Dies bedeutet einen kleineren Glättungsaufwand für die Ausgangsspannung bei der erfindungsgemäßen Schaltung. Bei der Einweggleichrichtung muß dagegen das Übersetzungsverhältnis des Transformators gegenüber der Vollweg-Gleichrichtung doppelt so groß sein, wodurch die Dioden für die doppelte Sperrspannung ausgelegt sein müssen. Der durch die Halbbrücke erzeugte unipolare magnetische Fluß im Transformator bedeutet, daß dieser entsprechend groß dimensioniert werden muß. Durch die Vormagnetisierung des Transformators ist dessen Dimensionierung wie bei einem bipolaren magnetischen Fluß möglich. Ausführungsbeispiele zeigen in:

Fig. 1 eine asymmetrische Brückenschaltung mit aktiven Schaltelementen zum Umwandeln einer Gleichspannung in Wechselspannung;

Fig. 2a eine herkömmliche Ansteuerung des Transistors 2 in der Schaltung gemäß Fig. 1;

Fig. 2b eine herkömmliche Ansteuerung des Transistors 5 in der Schaltung gemäß Fig. 1;

Fig. 2c den idealisierten Spannungsverlauf an der Induktivität 6 der Schaltung gemäß Fig. 1;

Fig. 2d den idealisierten Stromverlauf durch die Induktivität 6 der Schaltung gemäß Fig. 1;

Fig. 3 eine asymmetrische Brückenschaltung gemäß der Erfindung, deren Ausgang über einen Transformator einem Vollweggleichrichter zugeführt ist;

Fig. 4a die erfindungsgemäße Ansteuerung des Transistors 2 in der Schaltung gemäß Fig. 3;

Fig. 4b die erfindungsgemäße Ansteuerung des Transistors 5 in der Schaltung gemäß Fig. 3;

Fig. 4c den idealisierten Spannungsverlauf an der Sekundärseite des Transformators in der Schaltung gemäß Fig. 3;

Fig. 4d den Spannungsverlauf der durch den sekundärseitigen Gleichrichter der Schaltung gemäß Fig. 3 gleichgerichteten Spannung;

Fig. 4e den Verlauf des Primärstroms im Transformator der Schaltung gemäß Fig. 3;

Fig. 4f den Verlauf des Sekundärstroms im Transformator der Schaltung gemäß Fig. 3;

Fig. 5 die erfindungsgemäße Schaltungsanordnung mit zugehöriger Ansteuereinheit.

Fig. 6 eine Vormagnetisierungseinrichtung.

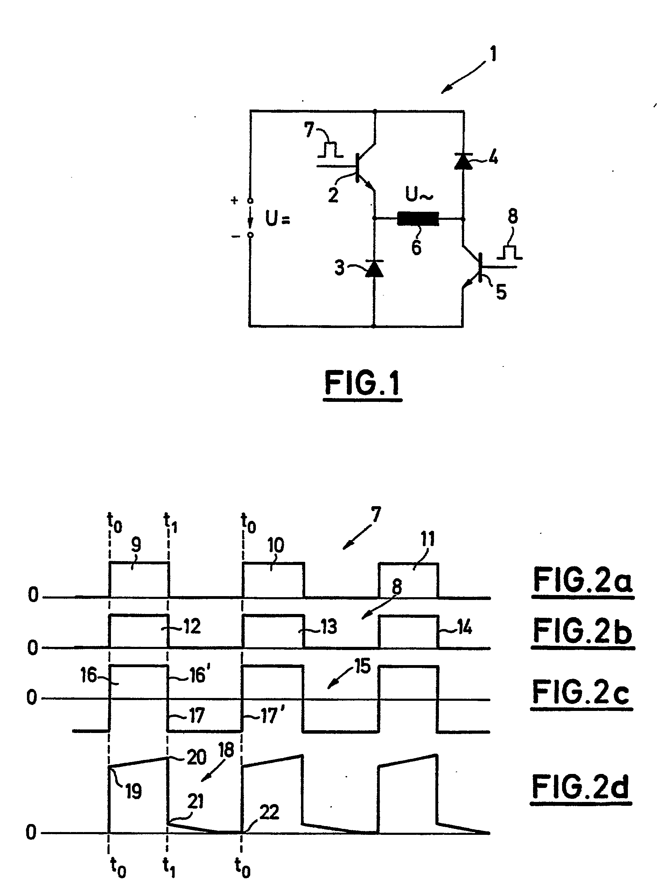

In der Fig. 1 ist eine asymmetrische Brückenschaltung bzw. ein Zerhacker 1 für die Umwandlung einer Gleichspannung $U_=$ in eine Wechselspannung $U_~$ dargestellt. Diese Brückenschaltung 1 ist als solche bekannt und enthält parallel zur Gleichspannung $U_=$ einen ersten Querzweig, der aus einem Transistor 2 und einer Diode 3 besteht. Parallel zu diesem ersten Querzweig ist ein zweiter Querzweig mit einer Diode 4 und einem in Reihe hierzu liegenden Transistor 5 geschaltet. Der Kollektor des Transistors 2 des ersten Querzweigs ist mit dem positiven Pol der Gleichspannung $U_=$ verbunden, während an dem negativen Pol der Gleichspannung $U_=$ die Anode der Diode 3 des ersten Querzweigs liegt. Die Kathode dieser Diode 3 ist mit dem Emitter des Transistors 2 verbunden. Bei dem zweiten Querzweig sind die Diode 4 und der Transistor 5 anders geschaltet. Hier liegt die Kathode der Diode 4 an dem positiven Pol der Gleichspannung $U_=$, während der Emitter des Transistors 5 an dem negativen Pol der Gleichspannung angeschlossen ist. Die Anode der Diode 4 ist dabei mit dem Kollektor des Transistors 5 verbunden.

Zwischen dem Emitter des Transistors 2 und den Kollektor des Transistors 5 ist außerdem eine Induktivität 6 geschaltet, an der eine Wechselspannung $U_~$ abfällt.

Die Ansteuerimpulse, die auf die Basen der Transistoren 2,5 gegeben werden, sind in der Fig. 1 symbolisch dargestellt und mit 7 bzw. 8 bezeichnet.

In den Figuren 2a, 2b sind diese Ansteuerimpulse 7,8 noch einmal dargestellt, und zwar in herkömmlicher Phasenlage. Man erkennt hierbei, daß die Ansteuerimpulse 7 für den Transistor 2, von denen nur drei Einzelimpulse 9,10,11 dargestellt sind, mit den Ansteuerimpulsen 8 für den Transistor 5, von denen ebenfalls nur drei Einzelimpulse 12,13,14 gezeigt sind, in Phase sind. Die Einzelimpulse 9,10,11 besitzen gleiche Höhe, Breite und Phasenlage wie die Einzelimpulse 12,13,14. Zwar ist es möglich, die Breite der Impulse 7 und 8 zu verändern, um eine Art Pulsbreitenmodulation zu erzielen, doch erfolgt diese Änderung bei beiden Impulsen 7,8 in derselben Weise. Werden die Transistoren 2 und 5 mit den erwähnten Impulsen angesteuert, so ergibt sich an der Induktivität 6 ein idealisierter Spannungsverlauf, wie er bei 15 in der Fig. 2c dargestellt ist. Das Durchschalten der Transistoren 2,5 erfolgt gleichzeitig zum Zeitpunkt $t_0$, so daß ein Strom über den Transistor 2, die Induktivität 6 und den Transistor 5 fließen kann, der an der Induktivität 6 die in der Fig. 2 gezeigte positive Spannung 16 aufbaut. Zum Zeitpunkt $t_1$ werden beide Transistoren 2,5 durch die Impulse 9,12 gesperrt, d. h. es kann kein Strom mehr über den Pfad 2-6-5 fließen, wodurch sich auch keine positive Spannung mehr an der Induktivität aufbauen kann. Die magnetische Energie, die zu diesem Zeitpunkt in der Induktivität 6 gespeichert ist, wird über die Dioden 3 und 4 aufgebaut, wodurch eine negative Spannung 17 an der Induktivität 6 entsteht. Der idealisierte Stromverlauf durch die Induktivität 6 ist in der Fig. 2d mit 18 bezeichnet. Man erkennt hieraus, daß der Strom beim Durchschalten der Transistoren 2,5 steil bis zum Punkt 19 ansteigt, um dann während der Leitphase der Transistoren 2,5 nur noch mit seinem Magnetisierungsstrom bis zum Punkt 20 anzusteigen. Werden die Transistoren 2,5 gesperrt, so fällt der Strom bis zum Punkt 21 ab, um dann während der Sperrphase der Transistoren 2,5 nur noch geringfügig bis zum Punkt 22 abzufallen, um den Magnetisierungsstrom über die Dioden 3,4 abzubauen.

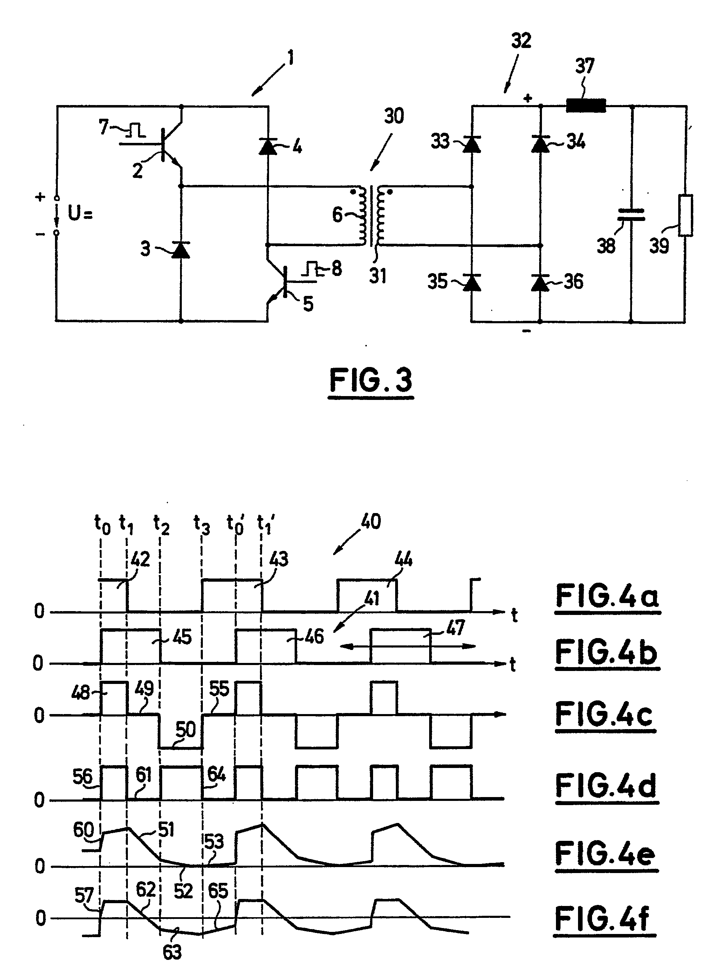

Streng genommen zeigt die Fig. 2d nicht den Strom in einer einfachen Induktivität, da der Strom in einer reinen Induktivität nicht springen kann, sondern den Strom durch eine Transformatordrossel gemäß Fig. 3, wo sich bei Belastung ein quasi-ohmsches Verhalten dieses Transformators einstellt. Fig. 2d zeigt folglich die Summe des Laststroms und des Magnetisierungsstroms des Transformators 30.

Kennzeichnend für die konventionelle Ansteuerung ist insbesondere, daß der Spannungsverlauf an der Induktivität 6 - die auch als die Primärseite eines Transformators aufgefaßt werden kann, dessen Sekundärseite eine Einweg-Gleichrichterbrückenschaltung speist - positive und negative Halbwellen aufweist, wobei die positiven Halbwellen 16,16' während der Ansteuerung der Transistoren 2,5 auftreten, während die negativen Halbwellen 17,17' während der Sperrphasen der Transistoren 2,5 auftreten. Ein analoger Spannungsverlauf ergibt sich auf der Sekundärseite eines Transformators, wenn die Induktivität 6 die Primärseite dieses Transformators darstellt. Wenn die Transistoren 2,5 durchgeschaltet sind, liegt an der Transformatorenwicklung eine positive Spannung. Der Transformator wird hierdurch aufmagnetisiert. Während der Zeit, in der beide Transistoren ausgeschaltet sind, liegt an der Transformatorenwicklung dagegen eine negative Spannung; d. h. der Transformator wird entmagnetisiert. Bei herkömmlicher Pulsbreitenmodulation bedeutet dies, daß immer nur eine positive oder eine negative Spannung am Transformator liegt. Bei Änderung der Pulsbreite verschiebt sich folglich der positive bzw. der negative Anteil der Spannung über dem Transformator. Richtet man dieses Spannungsglied gleich, so erhält man beim Durchsteuern der Ausgangsspannung keinen linearen Spannungsverlauf.

In der Fig. 3 ist eine erfindungsgemäße Schaltungsanordnung dargestellt, bei der Elemente, welche mit den Elementen der Fig. 1 übereinstimmen, dieselben Bezugszahlen haben. Die Induktivität 6 wird hierbei als Primärwicklung eines Transformators 30 verwendet, dessen Sekundärwicklung 31 mit einem Vollweggleichrichter 32 verbunden ist, der vier Dioden 33,34,35,36 aufweist. Die Sekundärwicklung 31 ist dabei einerseits an die Verbindung zwischen der Anode der Diode 33 und der Kathode der Diode 35 und andererseits an die Verbindung zwischen der Anode der Diode 34 und der Kathode der Diode 36 angeschlossen. An den Vollweggleichrichter 32 ist ein Siebelement mit einer Längsinduktivität 37 und einem Querkondensator 38 angeschaltet, wobei parallel zu diesem Querkondensator 38 eine Last 39 liegt.

Die Figuren 4a - 4f zeigen die erfindungsgemäßen Ansteuerungsimpulse und Ausgangsgrößen, die bei der Schaltungsanordnung gemäß Fig. 3 auftreten. Die Transistoren 2 und 3 werden hierbei von Impulsen angesteuert, die bezüglich ihrer Phase bis zu 180° gegeneinander geschoben werden können. Diese Impulse sind mit 40 bzw. 41 bezeichnet und weisen z. B. die Einzelimpulse 42,43,44 bzw. 45,46,47 auf. Die Impulse 42-44 bzw. 45-47 weisen eine Pulsbreite von 180 elektrischen Grad auf. Wegen der nicht-idealen Eigenschaften der verwendeten Bauelemente, z. B. endliche Freiwerdezeiten der Transistoren oder Aufmagnetisierung des Transformators, sind exakte 180° in der Praxis schwer erzielbar, so daß die Impulse in den Figuren 4a,4b etwas kleiner dargestellt sind. Im Idealfall entsprechen jedoch die Lücken zwischen der Impulsen den Impulsbreiten. Bei der Festlegung der erfindungsgemäßen Phasenverschiebung zwischen den Impulsen 40,41 ist darauf zu achten, daß die Zeit $t_1$-$t_0$, in der die Transistoren 2,5 gleichzeitig leitend sind, kürzer ist als die Sperrzeit, die für die vollständige Entmagnetisierung des Transformators 30 erforderlich ist. Geht man davon aus, daß der Transistor 2 bereits zur Zeit $t_0$ durchgeschaltet ist, wenn zur Zeit $t_0$ der Transistor 5 durchgeschaltet wird, so fließt zur Zeit $t_0$ ein Strom 60 durch den Transistor 2 und über die Primärwicklung 6 des Transformators 30 sowie durch den Transistor 5. An der Primärwicklung 6 baut sich eine positive Spannung 48 auf, die bis zur Zeit $t_1$ bestehen bleibt. Zu dieser Zeit $t_1$ wird der Transistor 2 gesperrt. Der Strom 51 kann danach allerdings immer noch fließen, und zwar über den Transistor 5 und die Diode 3. Die Spannung über die Primärwicklung 6 des Transformators 30 ist also durch den Transistor 5 und die Diode 3 kurzgeschlossen, d. h. sie wird zwischen $t_1$ und $t_2$ zu Null; was durch die Bezugszahl 49 angedeutet ist. Zum Zeitpunkt $t_2$ wird auch der Transistor 5 gesperrt, so daß die in der Primärseite 6 enthaltene magnetische Energie nur noch über die Dioden 3,4 abgebaut werden kann. Der Entmagnetisierungs-Strom 52 fließt somit in die Gleichspannungsquelle $U_{\approx}$ zurück. Während der Entmagnetisierung des Transformators 30 wird die Spannung 50 an der Primärseite dieses Transformators 30 negativ. Zum Zeitpunkt $t_3$ wird der Transistor 2 eingeschaltet, und der Strom 53 fließt über die Diode 4 und den Transistor 2 weiter durch die Primärwicklung 6. Während der Zeit $t_3$ bis $t_0'$ ist diese Primärwicklung 6 kurzgeschlossen, wodurch die Spannung 55 an ihr Null wird. Es sollen nun die Verhältnisse auf der Sekundärseite 31 des Transformators 30 betrachtet werden. Zum Zeitpunkt $t_0$ steht eine positive Spannung 56 an der Sekundärwicklung 31 des Transformators 30 an. Der Sekundärstrom 57 fließt über die Diode 33, die Glättungsdrossel 37, die Last 39 und über die Diode 36 durch die Sekundärwicklung 31 des Transformators 30. Zum Zeitpunkt $t_1$ wird die Spannung 61 an der Sekundärwicklung 31 Null, während der Strom in der Glättungsdrossel 37 über die Gleichrichteranordnung 33,35,34 und 36 in den Freilauf geht. Dadurch wird die Sekundärwicklung 31 kurzgeschlossen, wobei der Strom 62 durch sie weiterfließen kann.

Zum Zeitpunkt $t_2$ kehren sich die Spannung und der Strom an der Sekundärwicklung 31 um. Der Strom 63 fließt jetzt über die Diode 34, die Glättungsdrossel 37, der Lastwiderstand 39 und die Diode 35 in der Sekundärwicklung 31.

Zum Zeitpunkt $t_3$ wird die Spannung 64 an der Sekundärwicklung 31 wieder zu Null. Der Strom durch die Glättungsdrossel 37 geht über die Gleichrichteranordnung 33,35,34,36 in den Freilauf; die Sekundärwicklung 31 ist folglich kurzgeschlossen, wobei der Strom 65 in dieser Sekundärwicklung weiterfließt.

Dies gilt solange für die Primär- und die Sekundärseite des Transformators 30, bis die beiden Transistoren 2 und 5 auf Grund der Phasen-Verschiebung der Ansteuerimpulse zum gleichen Zeitpunkt ein- und ausschalten. Ist dies der Fall, so herrschen wieder die Verhältnisse, die im Zusammenhang mit den Figuren 1 und 2 beschrieben wurden.

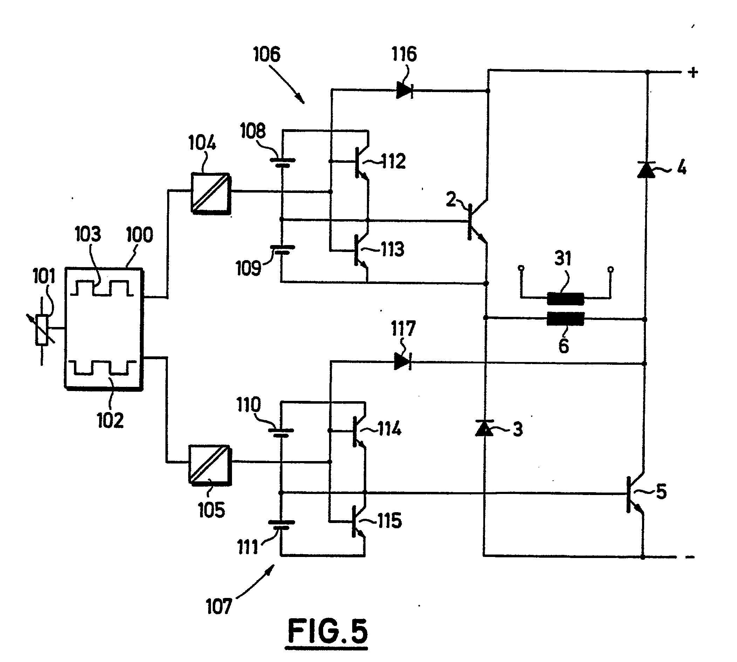

In der Fig. 5 ist die erfindungsgemäße asymmetrische Halbbrückenschaltung mit zugehöriger Ansteuerschaltung dargestellt. Diese Ansteuerschaltung weist eine Impulsverschiebeschaltung 100 auf, der ein Stellwiderstand 101 vorgeschaltet ist, mit dem eine Impulsverschiebung von 0° bis 180° möglich ist. Es werden dabei die unteren Impulse 102 gegenüber den oberen Impulsen 103 verschoben. Den beiden Ausgängen der Impulsverschiebeschaltung 100 ist jeweils ein Potentialtrenner 104,105 zugeordnet, der mit jeweils einem Treiber 106,107 verbunden ist. Jede dieser Treiber 106,107 besteht im wesentlichen aus zwei Gleichspannungsquellen 108,109; 110,111 und zwei Transistoren 112,113; 114,115, wobei die Basen der Transistoren 112,113 bzw. 114,115 zusammengeschaltet sind und einerseits an dem Potentialtrenner 104 bzw. 105 liegen und andererseits über eine Diode 116 bzw. 117 zur Quasisättigung mit dem Kollektor des Transistors 2 bzw. 5 verbunden sind. Die Basen der Transistoren 2 bzw. 5 sind an den Verbindungspunkt zwischen zwei Transistoren 113 bzw. 114,115 einer Treiberstufe 106 bzw. 107 sowie an den Verbindungspunkt zwischen den beiden Gleichspannungsquellen 108,109 bzw. 110,111 angeschlossen.

Es versteht sich, daß die Impulsverschiebung auf vielfältige Weise erfolgen kann. So ist es nicht nur möglich, die Impulse 102 relativ zu den festen Impulsen 103 zu verschieben, sondern auch die Impulse 102 festzuhalten und die Impulse 103 zu verschieben. Außerdem ist es möglich, beide Impulse 102,103 gleichzeitig und relativ zueinander zu verschieben.

Nicht dargestellt sind eventuelle Entlastungsnetzwerke, die bei den Transistoren 2,5 vorgesehen sein können, da solche Netzwerke bereits bekannt sind (vergl. Boehringer/Knöll: Die Entlastung des Transistors von überhöhter Verlustleistungsbeanspruchung beim Ausschalten, etz, Band 100, 1979, Heft 13, Seite 666-669, DE-AS 1 168 962).

Obwohl die Überlappung der beiden Steuerimpulse zwischen 0 % und 100 % regelbar ist, sind die Fälle 0 % und 100 % in der Praxis lediglich Grenzfälle.

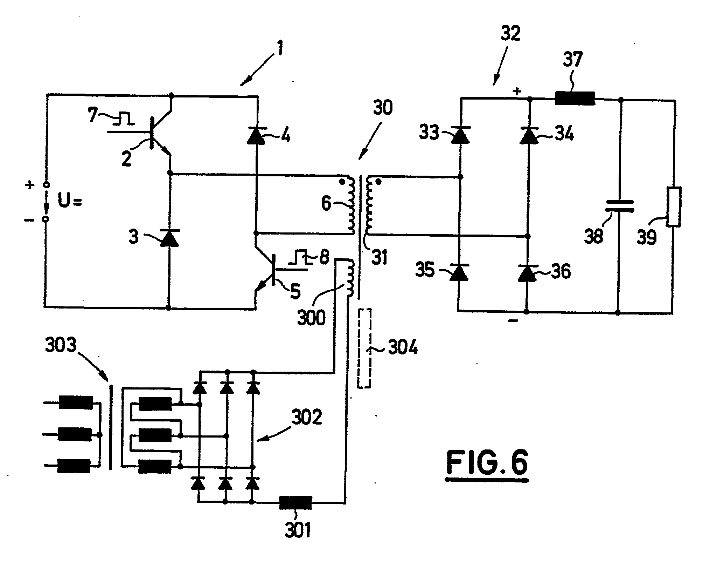

In der Fig.6 ist eine Schaltungsanordnung gezeigt, welche das Übertragungsverhalten des Transformators 30 für den zu übertragenden Energieimpuls verbessert. Mittels der Halbbrückenschaltung 1 wird der Transformator 30 nur in einem Ast der Magnetisierungskennlinie, der sogenannten B-H-Kurve, durchfahren, was eine ungünstige Transformatorausnutzung darstellt. Durch eine enstprechende flußmäßig entgegengepolte Vormagnetisierungseinrichtung wird die gesamte - negative und positive - Magnetisierungskennlinie durchfahren. Diese Vormagnetisierungseinrichtung besteht entweder aus einem Drehstromtransformator 303 mit nachgeschalteter Drehstrombrückenschaltung 302 und einer Strombegrenzungsdrossel 301, die das Fließen eines induzierten Wechselstroms in diesem Kreis weitgehend unterdrückt, oder aus einem Dauermagneten oder aus einer Kombination von beiden. Der Dauermagnet 304 ist in der Fig.6 lediglich gestrichelt angedeutet.

**Patentansprüche**

1. Gleichstrom-Wechselstrom-Wandler mit asymmetrischer Halbbrückenschaltung, welche eine energiespeichernde Komponente sowie einen ersten und einen zweiten Zweig aufweist, wobei jeder Zweig steuerbare Schaltmittel und Gleichrichter enthält, dadurch gekennzeichnet, daß die steuerbaren Schaltmittel (2, 5) mittels phasenverschobenen Steuerimpulsen von im wesentlichen 180° Pulsbreite angesteuert werden, wobei sich die Steuerimpulse teilweise zeitlich überlappen.

2. Gleichstrom-Wechselstrom-Wandler nach Anspruch 1, dadurch gekennzeichnet, daß die Überlappung der Impulse zwischen 0 und 100% regelbar ist.

3. Gleichstrom-Wechselstrom-Wandler nach Anspruch 1, dadurch gekennzeichnet, daß der erste Zweig parallel zur Eingangs-Gleichspannung (U=) geschaltet ist und aus einem steuerbaren Schalter (2) und einem gleichrichtenden Element (3) besteht, und daß der zweite Zweig parallel zur Eingangs-Gleichspannung (U=) geschaltet ist und aus einem gleichrichtenden Element (4) und einem steuerbaren Schalter (5) besteht.

4. Gleichstrom-Wechselstrom-Wandler nach Anspruch 3, dadurch gekennzeichnet, daß die gleichrichtenden Elemente Dioden (3, 4) und die steuerbaren Schalter Transistoren (2, 5) sind, wobei die Kathode der Diode (4) im zweiten Zweig mit dem Kollektor des Transistors (2) im ersten Zweig und die Anode der Diode (3) im ersten Zweig mit dem Emitter des Transistors (5) im zweiten Zweig verbunden ist.

5. Gleichstrom-Wechselstrom-Wandler nach den Ansprüchen 1 und 3, dadurch gekennzeichnet, daß die energiespeichernde Komponente (6) mit ihrem einen Anschluß an der Verbindung zwischen dem steuerbaren Schaltmittel (2) und dem gleichrichtenden Element (3) des ersten Zweigs und mit ihrem anderen Anschluß an der Verbindung zwischen dem steuerbaren Schaltmittel (5) und dem gleichrichtenden Element (4) des zweiten Zweigs liegt.

6. Gleichstrom-Wechselstrom-Wandler nach Anspruch 1, dadurch gekennzeichnet, daß die energiespeichernde Komponente eine Induktivität (6) ist.

7. Gleichstrom-Wechselstrom-Wandler nach Anspruch 6, dadurch gekennzeichnet, daß die Induktivität (6) die Primärseite eines Transformators (30) ist.

8. Gleichstrom-Wechselstrom-Wandler nach Anspruch 1, dadurch gekennzeichnet, daß die Steuerimpulse (7) für ein erstes Schaltmittel (2) fest sind, während die Steuerimpulse (8) für ein zweites Schaltmittel (5) relativ hierzu verschoben werden.

9. Gleichstrom-Wechselstrom-Wandler nach Anspruch 1, dadurch gekennzeichnet, daß die Steuerimpulse (8) für ein zweites Schaltmittel (5) fest sind, während die Steuerimpulse (7) für ein erstes Schaltmittel (2) relativ hierzu verschoben werden.

10. Gleichstrom-Wechselstrom-Wandler nach Anspruch 1, dadurch gekennzeichnet, daß sowohl die Steuerimpulse für ein erstes Schaltmittel (2) als auch die Steuerimpulse (8) für ein zweites Schaltmittel (5) gleichzeitig und relativ zueinander verschoben werden.

11. Gleichstrom-Wechselstrom-Wandler nach Anspruch 7, dadurch gekennzeichnet, daß zusätzlich zur Primärwicklung (6) des Transformators (30) eine Zusatzwicklung (300) vorgesehen ist, die über eine Drehstrombrückenschaltung (302) mit Gleichstrom vormagnetisiert wird.

12. Gleichstrom-Wechselstrom-Wandler nach Anspruch 11, dadurch gekennzeichnet, daß zwischen der Zusatzwicklung (300) und der Drehstrombrückenschaltung (302) eine Drossel (301) geschaltet ist, die einen Wechselfluß weitgehend unterdrückt.

13. Gleichstrom-Wechselstrom-Wandler nach Anspruch 11, dadurch gekennzeichnet, daß der Vormagnetisierungsfluß im Transformator (30) dem Fluß des zu transformierenden Energieimpulses entgegengesetzt ist.

14. Gleichstrom-Wechselstrom-Wandler nach Anspruch 11, dadurch gekennzeichnet, daß in den magnetischen Kreis des Transformators (30) Dauermagnete zur Erzeugung einer Vormagnetisierung eingebracht sind.

15. Gleichstrom-Wechselstrom-Wandler nach Anspruch 14, dadurch gekennzeichnet, daß der Fluß der Dauermagnete dem Fluß des zu transformierenden Energieimpulses entgegengesetzt ist.

16. Gleichstrom-Wechselstrom-Wandler nach einem oder mehreren der vorangegangenen Ansprüche, dadurch gekennzeichnet, daß die elektrisch erzeugte Vormagnetisierung und die durch Dauermagnete erzeugte Vormagnetisierung gemeinsam zur Anwendung kommen.

17. Gleichstrom-Gleichstrom-Wandler mit einem Gleichstrom-Wechselstrom-Wandler nach einem der Ansprüche 1 bis 7, dadurch gekennzeichnet, daß ausgangsseitig eine Vollbrücken-Gleichrichterschaltung (32) vorgesehen ist.

18. Gleichstrom-Gleichstrom-Wandler nach Anspruch 17, dadurch gekennzeichnet, daß der Gleichrichterschaltung (32) ein Siebglied (37, 38) nachgeschaltet ist.

19. Gleichstrom-Gleichstrom-Wandler nach Anspruch 18, dadurch gekennzeichnet, daß dem Siebglied (37, 38) eine Nutzlast (39) nachgeschaltet ist.

## Claims

1. D.c.-a.c. converter with an asymmetric half-bridge circuit that has an energy-storing component as well as a first arm and a second arm each containing controllable switching means and a rectifier, characterised in that the controllable switching means (2, 5) are driven by means of phase-shifted control pulses of substantially 180° pulse width, the control pulses partly overlapping in time.

2. D.c.-a.c. converter according to claim 1, characterised in that the overlapping of the pulses can be regulated between 0 and 100%.

3. D.c.-a.c. converter according to claim 1, characterised in that the first arm is connected parallel to the input d.c. voltage (U_) and consists of a controllable switch (2) and a rectifying element (3), and that the second arm is connected parallel to the input d.c. voltage (U_) and consists of a rectifying element (4) and a controllable switch (5).

4. D.c.-a.c. converter according to claim 3, characterised in that the rectifying elements are diodes (3, 4) and the controllable switches are transistors (2, 5), the cathode of the diode (4) in the second arm being connected to the collector of the transistor (2) in the first arm, and the anode of the diode (3) in the first arm being connected to the emitter of the transistor (5) in the second arm.

5. D.c.-a.c. converter according to claims 1 and 3, characterised in that the energy-storing component (6) is connected by one of its terminals to the connection between the controllable switching means (2) and the rectifying element (3) of the first arm and by its other terminal to the connection between the controllable switching means (5) and the rectifying element (4) of the second arm.

6. D.c.-a.c. converter according to claim 1, characterised in that the energy-storing component is an inductor (6).

7. D.c.-a.c. converter according to claim 6, characterised in that the inductor (6) is the primary side of a transformer (30).

8. D.c.-a.c. converter according to claim 1, characterised in that the control pulses (7) for a first switching means (2) are fixed, whilst the control pulses (8) for a second switching means (5) are displaced relative thereto.

9. D.c.-a.c. converter according to claim 1, characterised in that the control pulses (8) for a second switching means (5) are fixed, whilst the control pulses (7) for a first switching means (2) are displaced relative thereto.

10. D.c.-a.c. converter according to claim 1, characterised in that the control pulses (7) for a first switching means (2) as well as the control pulses (8) for a second switching means (5) are displaced simultaneously and relative to each other.

11. D.c.-a.c. converter according to claim 7, characterised in that in addition to the primary coil (6) of the transformer (30) there is provided an additional coil (300) which is premagnetised with direct current via a three-phase current bridge circuit (302).

12. D.c.-a.c. converter according to claim 11, characterised in that a choke (301), which extensively suppresses an alternating flow, is connected between the additional coil (300) and the three-phase current bridge circuit (302).

13. D.c.-a.c. converter according to claim 11, characterised in that the premagnetisation flux in the transformer (30) is opposed to the flux of the energy pulse to be transformed.

14. D.c.-a.c. converter according to claim 11, characterised in that permanent magnets for producing a premagnetisation are incorporated into the magnetic circuit of the transformer (30).

15. D.c.-a.c. converter according to claim 14, characterised in that the flux of the permanent magnets is opposed to the flux of the energy pulse to be transformed.

16. D.c.-a.c. converter according to one or more of the preceding claims, characterised in that the premagnetisation produced electrically and the premagnetisation produced by the permanent magnets are used together.

17. D.c.-a.c. converter with a d.c.-a.c. converter according to one of claims 1 to 7, characterised in that on the output side there is provided a full-bridge rectifier circuit (32).

18. D.c.-a.c. converter according to claim 17, characterised in that a filter member (37, 38) is connected downstream of the rectifier circuit (32).

19. D.c.-a.c. converter according to claim 18, characterised in that a useful load (39) is connected downstream of the filter member (37, 38).

**Revendications**

1. Convertisseur courant alternatif-courant continu avec circuit asymétrique en demi-pont, comportant un composant accumulant de l'énergie ainsi qu'une première et une deuxième branches, chaque branche contenant des moyens de commutation commandés et des redresseurs, caractérisé en ce que les moyens de commutation commandés (2, 5) sont commandés par des impulsions de commande déphasées d'une largeur d'impulsion à peu près égale à 180°, les impulsions de commande se recouvrant partiellement dans le temps.

2. Convertisseur courant alternatif-courant continu selon la revendication 1, caractérisé en ce que le recouvrement des impulsions est réglable entre 0 et 100%.

3. Convertisseur courant alternatif-courant continu selon la revendication 1, caractérisé en ce que la première branche est montée en parallèle à la tension continue d'entrée (U=) et est constituée d'un premier interrupteur commandé (2) et d'un élément redresseur (3), et en ce que la deuxième branche est montée en parallèle à la tension continue d'entrée (U=) et est constituée d'un élément redresseur (4) et d'un interrupteur commandé (5).

4. Convertisseur courant alternatif-courant continu selon la revendication 3, caractérisé en ce que les éléments redresseurs sont des diodes (3, 4) et les interrupteurs commandés des transistors (2, 5), la cathode de la diode (4) de la deuxième branche étant reliée au collecteur du transistor (2) de la première branche, et l'anode de la diode (3) de la première branche étant reliée à l'émetteur du transistor (5) de la deuxième branche.

5. Convertisseur courant alternatif-courant continu selon les revendications 1 et 3, caractérisé en ce que le composant accumulant de l'énergie (6) est raccordé par un de ses branchements, à la liaison entre le moyen de commutation commandé (2) et l'élément redresseur (3) de la première branche, et par son autre branchement, à la liaison entre le moyen de commutation commandé (5) et l'élément redresseur (4) de la deuxième branche.

6. Convertisseur courant alternatif-courant continu selon la revendication 1, caractérisé en ce que le composant accumulant de l'énergie est une inductance (6).

7. Convertisseur courant alternatif-courant continu selon la revendication 6, caractérisé en ce que l'inductance (6) est le côté primaire d'un transformateur (30).

8. Convertisseur courant alternatif-courant continu selon la revendication 1, caractérisé en ce que les impulsions de commande (7) pour un premier moyen de commutation (2) sont fixes, tandis que les impulsions de commande (8) pour un deuxième moyen de commutation (5) sont décalées par rapport aux autres.

9. Convertisseur courant alternatif-courant continu selon la revendication 1, caractérisé en ce que les impulsions de commande (8) pour un deuxième moyen de commutation 5 sont fixes, tandis que les impulsions de commande (7) pour un premier moyen de commutation (2) sont décalées par rapport aux autres.

10. Convertisseur courant alternatif-courant continu selon la revendication 1, caractérisé en ce que les impulsions de commande pour un premier moyen de commutation (2) ainsi que les impulsions de commande (8) pour un deuxième moyen de commutation (5) sont simultanées et décalées les unes par rapport aux autres.

11. Convertisseur courant alternatif-courant continu selon la revendication 7, caractérisé en ce qu'on prévoit en plus de l'enroulement primaire (6) du transformateur (30), un enroulement supplémentaire (300) qui est pré-magnétisé en courant continu, par un circuit triphasé en pont (302).

12. Convertisseur courant alternatif-courant continu selon la revendication 11, caractérisé en ce qu'on monte entre l'enroulement supplémentaire (300) et le circuit triphasé en pont (302), une bobine de choc (301) qui interdit presque totalement un flux alternatif.

13. Convertisseur courant alternatif-courant continu selon la revendication 11, caractérisé en ce que le flux de pré-magnétisation est opposé dans le transformateur (30) au flux de l'impulsion d'énergie à transformer.

14. Convertisseur courant alternatif-courant continu selon la revendication 11, caractérisé en ce qu'on insère dans le circuit magnétique du transformateur (30), des aimants permanents destinés à produire une pré-magnétisation.

15. Convertisseur courant alternatif-courant continu selon la revendication 14, caractérisé en ce que le flux des aimants permanents est opposé au flux de l'impulsion d'énergie à transformer.

16. Convertisseur courant alternatif-courant continu selon une ou plusieurs des revendications ci-dessus, caractérisé en ce que la pré-magnétisation produite électriquement et la pré-magnétisation produite par les aimants permanents sont utilisées en commun.

17. Convertisseur courant continu-courant continu comportant un convertisseur courant alternatif-courant continu selon une des revendications 1 à 7, caractérisé en ce qu'on prévoit côté sortie un circuit redresseur en pont complet (32).

18. Convertisseur courant continu-courant continu selon la revendication 17, caractérisé en ce qu'on monte un organe de filtrage (37, 38) en aval du circuit redresseur (32).

19. Convertisseur courant continu-courant continu selon la revendication 18, caractérisé en ce qu'on monte une charge utile (39) en aval de l'organe de filtrage (37, 38).

**FIG.1**

**FIG.2a**

**FIG.2b**

**FIG.2c**

**FIG.2d**

EP 0 231 481 B1

FIG.3

FIG.4a

FIG.4b

FIG.4c

FIG.4d

FIG.4e

FIG.4f

**FIG.5**

**FIG.6**